# EUROPÄISCHE PATENTANMELDUNG

(11) **EP 4 744 962 A1**
(43) Veröffentlichungstag der Anmeldung: **20.05.2026**
(21) Anmeldenummer: 25206028.0
(22) Anmeldetag: 01.10.2025
(51) Int. Cl.: B60N 3/02

(54) **HALTESTANGENANORDNUNG**

(30) Priorität: 19.11.2024 DE 102024211107
(71) Anmelder: Siemens Mobility GmbH, 80997 München (DE)
(72) Erfinder: Wanczura, Stefan, 47829 Krefeld (DE)
(74) Vertreter: Siemens Patent Attorneys

(57) **Zusammenfassung**

Die Erfindung betrifft eine Haltestangenanordnung insbesondere für ein Fahrzeug des Personentransports 1, umfassend eine Basis 100, ein Haltestangenelement 200 und eine obere Befestigung 300, wobei das Haltestangenelement 200 an der Basis 100 und an der oberen Befestigung 300 befestigt ist, wobei zwischen der Basis 100 und dem Haltestangenelement 200 und/oder der oberen Befestigung 300 und dem Haltestangenelement 200 zumindest eine Verbindungsanordnung 400, 500 ausgebildet ist, wobei die zumindest eine Verbindungsanordnung 400, 500 zumindest ein erstes Verbindungselement 410, 510 und zumindest ein zweites Verbindungselement 420, 520 aufweist, welche miteinander senkrecht zu einer Längsrichtung L des Haltstangenelements 200 koppel- und entkoppelbar sind.

## Beschreibung

Die Erfindung betrifft eine Haltestangenanordnung, insbesondere für ein Fahrzeug des Personentransports, umfassend eine Basis, ein Haltestangenelement und eine obere Befestigung, wobei das Haltestangenelement an der Basis und an der oberen Befestigung befestigt ist.

Ferner betrifft die Erfindung ein Fahrzeug des Personentransports, umfassend zumindest eine solche oder wie nachfolgend beschrieben, weitergebildete Haltestangenanordnung.

Bisherige Lösungen sehen in der Regel so aus, dass die eigentliche Haltestange über obere und untere Klemmstücke mit der oberen längslaufenden Haltestange bzw. einem Halter im Deckenbereich und einem unteren Befestigungspunkt, verbunden werden. Die Haltestangen und die Klemmstücke sind i.d.R. aus metallischen Werkstoffen (Aluminium, Stahl) ausgeführt. Besondere Vorkehrungen zum Toleranzausgleich sind i.d.R. nicht vorhanden.

Ausgehend davon liegt der Erfindung die Aufgabe zugrunde, eine schnellmontagefähige Haltestangenanordnung bereitzustellen.

Diese Aufgabe wird durch die Haltestangenanordnung des Anspruchs 1 und das Fahrzeug des Personentransports des Anspruchs 8 gelöst.

Vorteilhafte Ausgestaltungen und Weiterbildungen sind Gegenstand der jeweiligen Unteransprüche.

Erfindungsgemäß wird eine Haltestangenanordnung, insbesondere für ein Fahrzeug des Personentransports, bereitgestellt, umfassend eine Basis, ein Haltestangenelement und eine obere Befestigung, wobei das Haltestangenelement an der Basis und an der oberen Befestigung befestigt ist. Zwischen der Basis und dem Haltestangenelement und/oder der oberen Befestigung und dem Haltestangenelement ist zumindest eine Verbindungsanordnung ausgebildet, wobei die zumindest eine Verbindungsanordnung zumindest ein erstes Verbindungselement und zumindest ein zweites Verbindungselement aufweist, welche miteinander senkrecht zu einer Längsrichtung des Haltstangenelements koppel- und entkoppelbar sind.

Hierdurch wird erreicht, dass das Haltestangenelement schnellmontagefähig ausgebildet ist, da die Haltestangenanordnung über die zumindest eine Verbindungsanordnung angebunden ist. Dies erlaubt es, die Haltestangenanordnung einfach und schnell zu montieren und zu demontieren, sodass Montagezeiten bei der Herstellung und Instandhaltung reduziert werden können.

Erfindungsgemäß wird ferner ein Fahrzeug des Personentransports bereitgestellt, umfassend eine solche, oder wie nachfolgend beschrieben, weitergebildete Haltestandgenanordnung.

Es ist vorgesehen, dass zwischen der Basis und dem Haltestangenelement zumindest eine Verbindungsanordnung ausgebildet ist und/oder zwischen der oberen Befestigung und dem Haltestangenelement zumindest eine Verbindungsanordnung ausgebildet ist.

Vorzugsweise sind zwei Verbindungsanordnungen ausgebildet, wobei vorzugsweise zwei erste Verbindungselemente und zwei zweite Verbindungselemente ausgebildet sind. Demnach umfasst jede der Verbindungsanordnungen ein erstes Verbindungselement und ein zweites Verbindungselement.

Die Längsrichtung des Haltstangenelements verläuft durch die Enden bzw. die Anbindungspunkte (Verbindungsanordnung) des Haltestangenelements.

Durch die erfindungsgemäße Ausgestaltung ist die gesamte Haltestange durch die zumindest eine, vorzugsweise die zwei Verbindungsanordnungen, senkrecht zu einer Längsrichtung des Haltstangenelements, koppel- und entkoppelbar.

Hierdurch wird eine schnellmontagefähige, sehr kompakte, wiederlösbare Haltestangenanordnung angegeben.

Die erfindungsgemäße Haltestangenanordnung ist einfach konstruiert und leicht zu justieren.

Durch die erfindungsgemäße Haltestangenanordnung wird ein schnellmontagefähiges Haltestangensystem in Leichtbauweise für eine Befestigung zwischen der Basis und der oberen Befestigung in einem Fahrzeug des Personentransports realisiert.

Die obere Befestigung kann z.B. über ein T-förmiges Klemmstück, welches mit den in Fahrzeuglängsrichtung laufenden Haltestangen verbunden ist, erfolgen. Analog kann die Befestigung aber auch über ein entsprechendes Klemmstück erfolgen, welches dann an der Decke befestigt ist.

Durch die erfindungsgemäße Haltestangenanordnung wird ein vertikaler Toleranzausgleich, eine Selbstzentrierung, geringe Montagezeiten und geringem Gewicht, bei gleichzeitig maximaler Biegesteifigkeit der Haltestange geschaffen.

Ferner ist die erfindungsgemäße Haltestangenanordnung modular aufgebaut.

In Ausgestaltung kann vorgesehen sein, dass die zumindest eine Verbindungsanordnung als Schnellmontagekupplung ausgebildet ist.

Die Anbindung der Basis an den Rohbau eines Fahrzeugs kann wahlweise lösbar (z.B. geschraubt) oder unlösbar (z.B. geschweißt) ausgeführt werden.

Ferner ist die erfindungsgemäße Haltestangenanordnung ein Schnellmontagekonzept, welches einbaufertig in das Fahrzeug einbringbar ist und keine weiteren vorbereitenden Tätigkeiten, wie z.B. Bohren, Nieten etc. erfordert.

In Ausgestaltung der Haltestangenanordnung kann vorgesehen sein, dass das zumindest eine erste Verbindungselement dem Haltestangenelement zugeordnet ist und das zumindest eine zweite Verbindungselement der Basis und/oder der oberen Befestigung zugeordnet ist.

Hierdurch wird erreicht, dass das zumindest eine erste Verbindungselement dem Haltestangenelement zugeordnet wird und damit zusammen mit der Haltestange montierbar ist, wobei das zweite Verbindungselement mit dem Rohbau des Fahrzeugs des Personentransports (konkret der Basis und/oder der oberen Befestigung) befestigt ist und somit die Haltestange mitsamt dem zumindest einen ersten Verbindungselement aufnehmen kann.

Hierdurch wird eine einfache Montagefähigkeit erreicht.

Vorzugsweise sind zwei erste Verbindungselemente dem Haltestangenelement zugeordnet.

Vorzugsweise ist jeweils ein zweites Verbindungselement der Basis und ein zweites Verbindungselement der oberen Befestigung zugeordnet.

In Ausgestaltung der Haltestangenanordnung kann vorgesehen sein, dass das zumindest eine erste Verbindungselement mit dem Haltestangenelement adhäsiv und/oder stoffschlüssig verbunden ist.

Hierdurch wird eine einfache, zuverlässige und dauerhafte Verbindung des zumindest einen ersten Verbindungselements mit dem Haltestangenelement bereitgestellt.

Vorzugsweise sind zwei erste Verbindungselemente dem Haltestangenelement zugeordnet, wobei ferner vorzugsweise ein erstes Verbindungselement am oberen Ende des Haltestangenelements angeordnet ist und ein erstes Verbindungselement am unteren Ende des Haltestangenelements angeordnet ist.

In vorteilhafter Ausgestaltung ist die zumindest eine Verbindungsanordnung aus Metall, ferner vorzugsweise aus Aluminium, ferner vorzugsweise einer hochfesten Aluminiumlegierung, ausgebildet.

Hierdurch wird eine leichtbauende Verbindungsanordnung bereitgestellt.

In vorteilhafter Ausgestaltung sind das zumindest eine erste Verbindungselement und das zumindest eine zweite Verbindungselement aus Metall, ferner vorzugsweise aus Aluminium, ferner vorzugsweise einer hochfesten Aluminiumlegierung, ausgebildet.

Hierdurch werden leichtbauende Verbindungselemente bereitgestellt.

In Ausgestaltung der Haltestangenanordnung kann vorgesehen sein, dass das zumindest eine zweite Verbindungselement mit der Basis und/oder der oberen Befestigung über einen, vorzugsweise jeweils einen, Schiebesitz, verbunden ist und durch eine Kraftschlussvorrichtung, vorzugsweise durch eine schraubbare Klemmvorrichtung, derart verbunden ist, dass das zweite Verbindungselement, in seiner Position fixiert ist.

Hierdurch ist ein Toleranzausgleich in Längsrichtung des Haltstangenelements erreicht, sodass eine räumlich einstellbare Haltestangenanordnung, insbesondere für Fahrzeuge zur Personenbeförderung, geschaffen wird, mit welcher Fertigungstoleranzen (z.B. vom Wagenkasten) ausgleichbar sind.

Gleichsam kann durch die Kraftschlussvorrichtung auf einfache Art und Weise eine Fixierung des Schiebesitzes stattfinden.

In Ausgestaltung der Haltestangenanordnung kann vorgesehen sein, dass das Haltestangenelement aus einem Faserverbundwerkstoff, vorzugsweise CFK und/oder GFK, hergestellt ist.

Vorzugsweise kann das Haltestangenelement durch das Pultrusionsverfahren hergestellt sein, welches es erlaubt, sehr präzise Rohrprofile mit genau definiertem Innen- und Außendurchmesser herzustellen. Das Rohrprofil kann hierbei als Halbzeug angesehen werden, welches einfach auf das gewünschte Maß abgelängt wird.

Durch den Einsatz von CFK wird eine hohe Biegesteifigkeit des Haltestangenelements erreicht. Des Weiteren kann das Haltestangenelement beim Einsatz von CFK eine Sicht-Carbon-Optik aufweisen, sodass das Haltestangenelement als Designelement ausgebildet ist.

In Ausgestaltung der Haltestangenanordnung kann vorgesehen sein, dass die zumindest eine Verbindungsanordnung zumindest ein Fixierelement aufweist, welches dazu ausgebildet ist, das zumindest eine erstes Verbindungselement und das zumindest eine zweite Verbindungselement in ihrer Position zueinander im verbundenen Zustand zu fixieren.

Durch das Fixierelement wird erreicht, dass die Positionierung eines ersten Verbindungselements und eines zweiten Verbindungselements zueinander arretierbar ist und die Haltestangenanordnung in ihrer Position fixierbar ist.

Vorzugsweise sind zwei Verbindungsanordnungen ausgebildet, wobei jeder Verbindungsanordnung ein Fixierelement zugeordnet ist.

In Ausgestaltung der Haltestangenanordnung kann vorgesehen sein, dass die zumindest eine Verbindungsanordnung durch eine Verkleidung verkleidet ist.

Vorzugsweise sind zwei Verbindungsanordnungen ausgebildet, wobei jeder Verbindungsanordnung jeweils eine Verkleidung zugeordnet ist.

In Ausgestaltung des Fahrzeugs des Personentransports kann vorgesehen sein, dass das Fahrzeug des Personentransports eine Bodenkonstruktion aufweist und die Haltestangenanordnung an der Bodenkonstruktion befestigt ist, wobei die Basis integraler Bestandteil der Bodenkonstruktion ist und mit zumindest einer, vorzugsweise umlaufenden, Schweißnaht an der Bodenkonstruktion befestigt ist.

Die Schnittstelle wird dabei als entsprechend ausgebildetes Formstück fest in die Untergestell-Bodenplatte integriert (i.d.R. durch eine umlaufende Anschluss - Schweißnaht) und ist fester Bestandteil dieser. Hierdurch wird eine besonders starke Verbindung zwischen Bodenkonstruktion und Haltestangenanordnung geschaffen.

In Ausgestaltung des Fahrzeugs des Personentransports kann vorgesehen sein, dass die Basis mit einer Schweißnaht an einen Obergurt der Bodenkonstruktion angebunden ist, vorzugsweise derart, dass ein Fuß der Basis im Stumpfstoß an den Obergurt angeschweißt ist.

Hierdurch wird eine einfache Herstellbarkeit der Verbindung von Haltestangenanordnung und Bodenkonstruktion erreicht.

In Ausgestaltung des Fahrzeugs des Personentransports kann vorgesehen sein, dass die Basis die Hüllkontur der Bodenkonstruktion nicht oder um weniger als 15cm, vorzugsweise weniger als 10cm, überragt.

Es kann vorgesehen sein, dass die Hüllkontur der Basis nicht, oder nur wenig, über eine Fußbodenoberkante bspw. eines auf der Bodenkonstruktion montierten Fußbodens, hinausragt. Dies ist insofern wichtig, um die nachfolgenden Montageschritte, wie Einbringen der Fußbodenplatte, oder das Aufbringen des Fußbodenbelages, nicht zu behindern/zu erschweren.

In Ausgestaltung des Fahrzeugs des Personentransports kann vorgesehen sein, dass die Basis mit einer umlaufenden ersten Schweißnaht an einen Obergurt der Bodenkonstruktion angebunden ist, vorzugsweise derart, dass ein Fuß der Basis im Stumpfstoß an den Obergurt angeschweißt ist.

In Ausgestaltung des Fahrzeugs des Personentransports kann vorgesehen sein, dass das Fahrzeug des Personentransports ein spurgeführtes Fahrzeug, vorzugsweise ein Schienenfahrzeug, ist.

Vorzugsweise handelt es sich bei dem Schienenfahrzeug um eine Commuterbahn, eine Regionalbahn oder eine S-Bahn.

Nachfolgend soll die Erfindung anhand einer Ausführungsform mit Bezug auf die Zeichnungen erläutert werden.

Es zeigt:
- Fig. 1: eine schematische Schnittdarstellung einer erfindungsgemäßen Haltestangenanordnung;
- Fig. 2: eine schematische detaillierte Schnittdarstellung eines oberen Bereichs der erfindungsgemäßen Haltestangenanordnung;
- Fig. 3: eine schematische detaillierte Schnittdarstellung eines unteren Bereichs der erfindungsgemäßen Haltestangenanordnung;
- Fig. 4a: eine schematische detaillierte Schnittdarstellung eines mittleren Bereichs der erfindungsgemäßen Haltestangenanordnung;
- Fig. 4b: eine schematische Schnittdarstellung entlang des Schnitts A-A der Fig. 4a

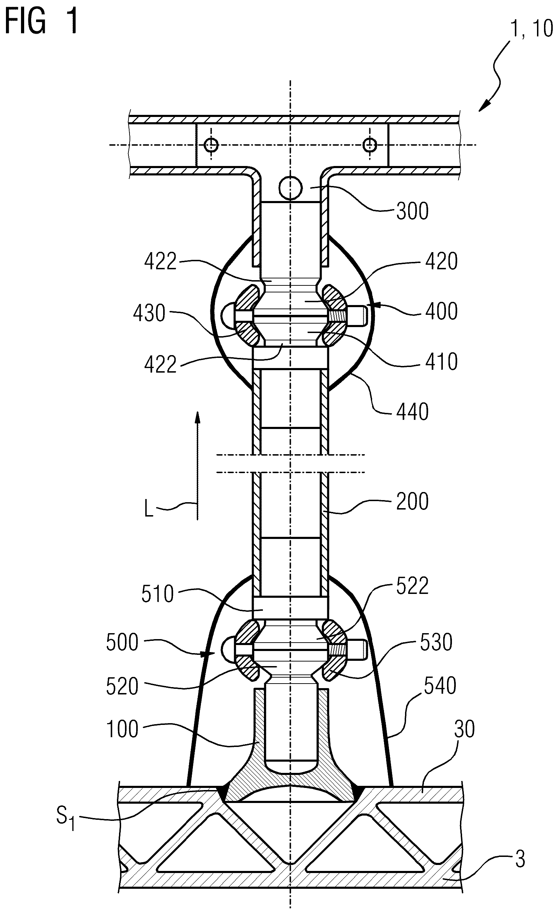

Fig. 1 zeigt eine schematische Schnittdarstellung einer erfindungsgemäßen Haltestangenanordnung 10 eines erfindungsgemäßen Fahrzeugs des Personentransports 1.

Das Fahrzeug des Personentransports 1 umfasst zumindest eine Haltestandgenanordnung 10.

Das Fahrzeug des Personentransports 1 weist eine Bodenkonstruktion 3 auf und die Haltestangenanordnung 10 ist an der Bodenkonstruktion 3 befestigt.

Das Fahrzeug des Personentransports 1 ist vorzugsweise ein spurgeführtes Fahrzeug, ferner vorzugsweise ein Schienenfahrzeug.

Die Haltestangenanordnung 10 ist insbesondere für ein Fahrzeug des Personentransports 1 ausgebildet, wie in Fig. 1 gezeigt.

Die Haltestangenanordnung 10 umfasst eine Basis 100, ein Haltestangenelement 200 und eine obere Befestigung 300.

Das Haltestangenelement 200 ist an der Basis 100 und an der oberen Befestigung 300 befestigt.

Zwischen der Basis 100 und dem Haltestangenelement 200 und/oder der oberen Befestigung 300 und dem Haltestangenelement 200 ist zumindest eine Verbindungsanordnung 400, 500 ausgebildet.

Die zumindest eine Verbindungsanordnung 400, 500 weist zumindest ein erstes Verbindungselement 410, 510 und zumindest ein zweites Verbindungselement 420, 520 auf, welche miteinander senkrecht zu einer Längsrichtung L des Haltstangenelements 200 koppel- und entkoppelbar sind.

Wie in der Fig. 1 ersichtlich, ist gemäß der Ausführungsform zwischen der Basis 100 und dem Haltestangenelement 200 eine erste Verbindungsanordnung 400 ausgebildet.

Wie in der Fig. 1 ersichtlich, ist gemäß der Ausführungsform zwischen der oberen Befestigung 300 und dem Haltestangenelement 200 eine zweite Verbindungsanordnung 500 ausgebildet.

Wie in der Fig. 1 ersichtlich, sind gemäß der Ausführungsform zwei erste Verbindungselemente 410, 510 ausgebildet.

Wie in der Fig. 1 ersichtlich, sind gemäß der Ausführungsform zwei zweite Verbindungselemente 420, 520 ausgebildet.

Die Längsrichtung des Haltestangenelements 200 ist durch die Anbindungspunkte des Haltestangenelements 200, an der ersten Verbindungsanordnung 400 und der zweiten Verbindungsanordnung 500 definiert.

Gemäß der Ausführungsform ist das gesamte Haltestangenelement 200 durch die erste Verbindungsanordnung 400 und die zweite Verbindungsanordnung 500 entkoppelbar.

Gemäß der Ausführungsform sind die zwei ersten Verbindungselemente 410, 510 dem Haltestangenelement 200 zugeordnet ist.

Gemäß der Ausführungsform sind die zwei zweiten Verbindungselemente 420, 520 der Basis und der oberen Befestigung 300 zugeordnet.

Das zumindest eine erste, vorzugsweise die zwei, Verbindungselement/e 410, 510 ist/sind mit dem Haltestangenelement 200 adhäsiv und/oder stoffschlüssig verbunden.

In die beiden Enden des Haltestangenelements ist vorzugsweise jeweils ein Verbindungselement mittels eines geeigneten Klebstoffsystem (z.B. einem zwei Komponenten Epoxidharzklebstoff) geklebt. Nach dem Aushärten ist das Haltestangenelement einbaufertig.

Die zweit zweiten Verbindungselemente 420, 520 sind mit der Basis 100 und der oberen Befestigung 300 über jeweils einen, Schiebesitz 422, 522 verbunden und durch jeweils eine Kraftschlussvorrichtung 120, 320, vorzugsweise jeweils durch eine schraubbare Klemmvorrichtung, derart verbunden sind, dass das jeweilige zweite Verbindungselement 420, 520, in seiner Position fixiert ist.

In Ausgestaltung der Ausführungsform ist vorgesehen, dass das Haltestangenelement 200 aus einem Faserverbundwerkstoff, vorzugsweise CFK und/oder GFK, hergestellt ist.

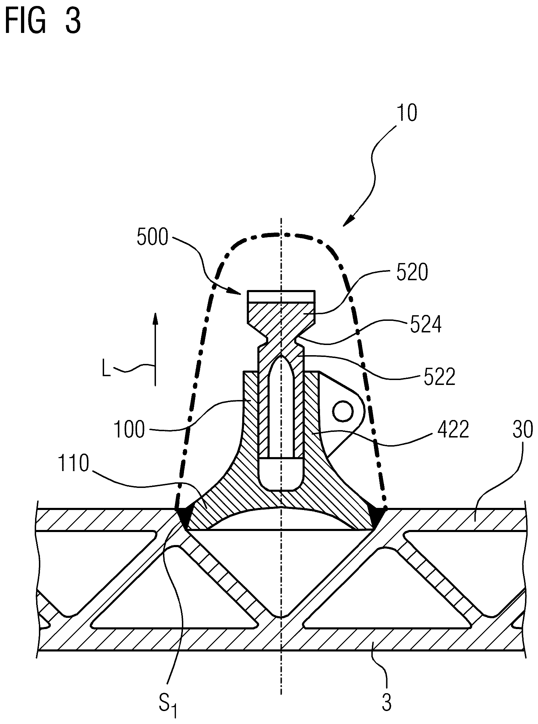

Wie aus der Fig. 1 und der Fig. 3 ersichtlich, ist die Basis 100 mit einer Schweißnaht S₁ an einen Obergurt 30 der Bodenkonstruktion 3 angebunden, vorzugsweise derart, dass ein Fuß 110 der Basis 100 im Stumpfstoß an den Obergurt 30 angeschweißt ist.

Die zumindest eine Verbindungsanordnung 400, 500 ist durch eine Verkleidung 440, 540 verkleidet. In Ausgestaltung ist gemäß der Ausführungsform die erste Verbindunganordnung 400 mit einer ersten Verkleidung 440 versehen und die zweite Verbindungsanordnung 500 ist mit einer zweiten Verkleidung 540 versehen.

Die zumindest eine Verkleidung 440, 540 ist dabei derart ausgebildet, dass eine Manipulation oder Demontage der Haltestangenanordnung 10 durch Fahrgäste nicht möglich ist.

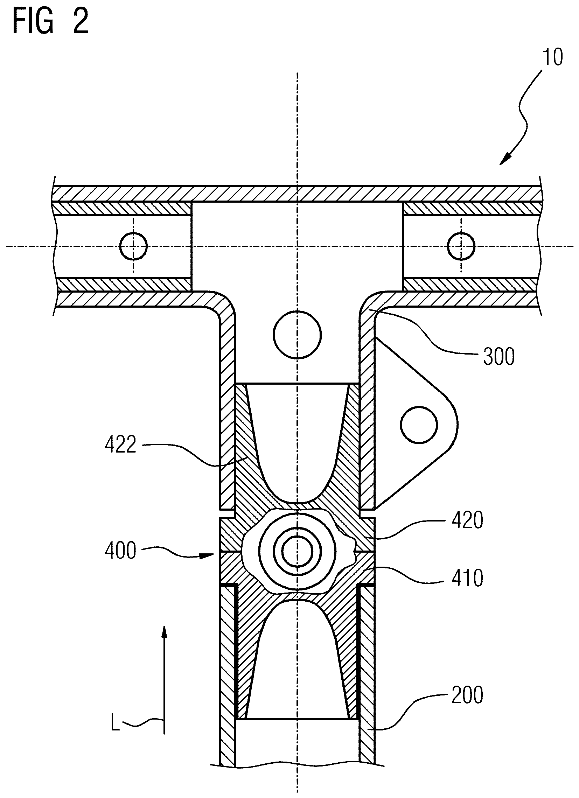

Fig. 2 zeigt eine schematische detaillierte Schnittdarstellung eines oberen Bereichs der erfindungsgemäßen Haltestangenanordnung 10.

Wie bereits vorstehend in Bezug auf Fig. 1 dargelegt, weist die Haltestangenanordnung 10 ein Haltestangenelement 200 und eine obere Befestigung 300 auf, welche gemäß Fig. 2 detailliert dargestellt sind.

Das Haltestangenelement 200 ist an der oberen Befestigung 300 befestigt und zwischen dem Haltestangenelement 200 und der oberen Befestigung 300 die Verbindungsanordnung 500 ausgebildet.

Die erste Verbindungsanordnung 400 weist ein Fixierelement 430 auf, welches dazu ausgebildet ist, das erste Verbindungselement 410 und das zweite Verbindungselement 420 in ihrer Position zueinander im verbundenen Zustand zu fixieren.

Das Fixierelement 430 weist dabei einen Druckkegel auf.

Fig. 3 zeigt eine schematische detaillierte Schnittdarstellung eines unteren Bereichs der erfindungsgemäßen Haltestangenanordnung 10.

Wie bereits vorstehend in Bezug auf Fig.1 dargelegt, weist die Haltestangenanordnung 10 ein Haltestangenelement 200 und eine Basis 100 auf, welche gemäß Fig. 3 detailliert dargestellt sind.

Das Haltestangenelement 200 ist an der Basis 100 befestigt und zwischen dem Haltestangenelement 200 und der Basis 100 die Verbindungsanordnung 500 ausgebildet.

Die zweite Verbindungsanordnung 500 weist ein Fixierelement 530 auf, welches dazu ausgebildet ist, das erste Verbindungselement 510 und das zweite Verbindungselement 520 in ihrer Position zueinander im verbundenen Zustand zu fixieren.

Das Fixierelement 430 weist dabei einen Druckkegel auf.

Die Basis 100 überragt in Ausgestaltung die Hüllkontur der Bodenkonstruktion 3 nicht oder um weniger als 15cm, vorzugsweise weniger als 10cm.

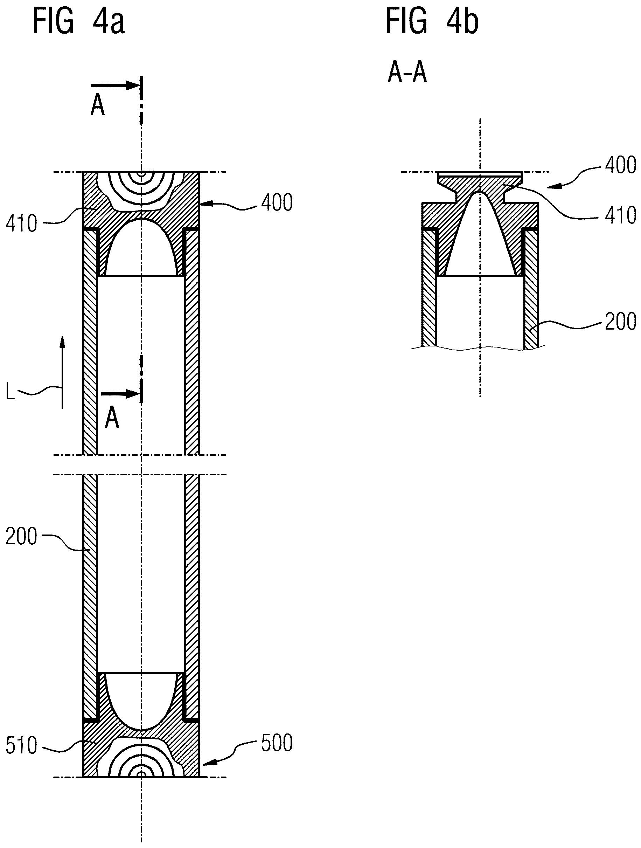

Fig. 4a zeigt eine schematische detaillierte Schnittdarstellung eines mittleren Bereichs der erfindungsgemäßen Haltestangenanordnung 10.

Wie bereits vorstehend in Bezug auf Fig.1 dargelegt, weist die Haltestangenanordnung 10 ein Haltestangenelement 200 und eine erste Verbindungsanordnung 400 und eine zweite Verbindungsanordnung 500 auf, welche gemäß Fig. 4a detailliert dargestellt sind.

Wie aus Fig. 4a ersichtlich sind gemäß der Ausführungsform die zwei ersten Verbindungselemente 410, 510 an dem Haltestangenelement 200 befestigt.

Dazu sind die zwei ersten Verbindungselemente 410, 510 mit dem Haltestangenelement 200 adhäsiv und/oder stoffschlüssig verbunden.

In Ausgestaltung weisen die zwei ersten Verbindungselemente 410, 510 und die zwei zweiten Verbindungselemente 420, 520 jeweils eine Halbschale 412, 422, 512, 522 auf.

Fig. 4b zeigt eine schematische Schnittdarstellung entlang des Schnitts A-A der Fig. 4a.

Wie aus der Fig. 4b ersichtlich ist, weisen die zwei ersten Verbindungselemente 410, 510, 420, 520 jeweils einen kegelstumpfförmigen Bereich 414, 424, 514, 524 auf.

Nachfolgend wird in Bezug auf die Fig. 1 bis Fig. 4b die Montagereihenfolge und einzelne Zustände in Bezug auf die Montage beschrieben:
In Bezug auf die Montage der erfindungsgemäßen Haltestangenanordnung 10 liegen die erste Verbindungsanordnung 400 und die zweite Verbindungsanordnung 500 jeweils nach der Montage an ihren Stirnflächen an. Über das jeweilige Fixierelement 430, 530 sind jeweils die Verbindungsanordnung 400, 500 durch das jeweilige ersten Verbindungselement 410, 510 und jeweilige zweiten Verbindungselement 420, 520 miteinander verbunden.

Hierzu weist das jeweilige Fixierelement 430, 530 jeweils einen Kegel, vorzugsweise einen Druckkegel auf, welcher in den kegelstumpfförmigen Bereich 414, 424, 514, 524 eingreift. Die dafür notwendige Vorspannkraft wird entweder über eine Schrauben-/ oder Nietverbindung (z.B. ein Schließringbolzensystem) erzeugt.

Beim Setzen einer Verbindungsanordnung findet automatisch eine Zentrierung über die beiden kegelstumpfförmigen Bereich 414, 424, 514, 524 und den beiden Kegeln des Fixierelements 430, 530 statt.

Über den Kegel erfolgt eine Kraftübersetzung, so dass eine kleine Vorspannkraft eine große Anpresskraft in Längsrichtung der Längsrichtung erzeugt.

Die Verbindungselemente 410, 420, 510, 520 weisen an der Gegenseite des kegelstumpfförmigen Bereichs 414, 424, 514, 524 einen zylindrischen Rohrabschnitt auf, welcher bei der Montage in eine entsprechende Aufnahmebohrung der Basis 100, der Haltestange 200 oder der oberen Befestigung 300 eintaucht.

Die vorstehende Offenbarung gilt gleichermaßen für ein Fahrzeug des Personentransports, vorzugsweise ein spurgeführtes Fahrzeug, insbesondere ein Schienenfahrzeug, umfassend zumindest eine, wie vorstehend beschrieben, ausgeführte Haltestangenanordnung. Gleichsam kann sich die vorstehende Offenbarung auch auf einen einzelnen Wagenkasten eines spurgeführten Fahrzeugs beziehen.

Abschließend sei erwähnt, dass die Merkmale aller oben beschriebenen Ausführungsvarianten untereinander in beliebiger Weise kombiniert werden können, um weitere andere Ausführungsbeispiele der Erfindung zu bilden. Auch können alle Merkmale von Unteransprüchen jeweils für sich mit jedem Merkmal jedes anderen der Ansprüche kombiniert werden, und zwar jeweils für sich allein oder in beliebiger Kombination, um weitere andere Ausführungsbeispiele zu erhalten.

Obwohl die Erfindung im Detail durch ein Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Haltestangenanordnung (10), insbesondere für ein Fahrzeug des Personentransports (1), umfassend eine Basis (100), ein Haltestangenelement (200) und eine obere Befestigung (300), wobei das Haltestangenelement (200) an der Basis (100) und an der oberen Befestigung (300) befestigt ist,
**dadurch gekennzeichnet, dass**
zwischen der Basis (100) und dem Haltestangenelement (200) und/oder der oberen Befestigung (300) und dem Haltestangenelement (200) zumindest eine Verbindungsanordnung (400, 500) ausgebildet ist, wobei die zumindest eine Verbindungsanordnung (400, 500) zumindest ein erstes Verbindungselement (410, 510) und zumindest ein zweites Verbindungselement (420, 520) aufweist, welche miteinander senkrecht zu einer Längsrichtung (L) des Haltstangenelements (200) koppel- und entkoppelbar sind.

2. Haltestangenanordnung (10), nach Anspruch 1,
**dadurch gekennzeichnet, dass**
das zumindest eine erste Verbindungselement (410, 510) dem Haltestangenelement (200) zugeordnet ist und das zumindest eine zweite Verbindungselement (420, 520) der Basis und/oder der oberen Befestigung (300) zugeordnet ist.

3. Haltestangenanordnung (10) nach Anspruch 1 oder 2,
**dadurch gekennzeichnet, dass**
das zumindest eine erste Verbindungselement (410, 510) mit dem Haltestangenelement (200) adhäsiv und/oder stoffschlüssig verbunden ist.

4. Haltestangenanordnung (10) nach einem der vorhergehenden Ansprüche,
**dadurch gekennzeichnet, dass**
das zumindest eine zweite Verbindungselement (420, 520) mit der Basis (100) und/oder der oberen Befestigung (300) über einen, vorzugsweise jeweils einen, Schiebesitz (422, 522) verbunden ist und durch eine Kraftschlussvorrichtung (120, 320), vorzugsweise durch eine schraubbare Klemmvorrichtung, derart verbunden ist, dass das zweite Verbindungselement (420, 520), in seiner Position fixiert ist.

5. Haltestangenanordnung (10) nach einem der vorhergehenden Ansprüche,
**dadurch gekennzeichnet, dass**
das Haltestangenelement (200) aus einem Faserverbundwerkstoff, hergestellt ist.

6. Haltestangenanordnung (10) nach einem der vorhergehenden Ansprüche,
**dadurch gekennzeichnet, dass**
die zumindest eine Verbindungsanordnung (400, 500) zumindest ein Fixierelement (430, 530) aufweist, welches dazu ausgebildet ist, das zumindest eine erstes Verbindungselement (410, 510) und das zumindest eine zweite Verbindungselement (420, 520) in ihrer Position zueinander im verbundenen Zustand zu fixieren.

7. Haltestangenanordnung (10) nach einem der vorhergehenden Ansprüche,
**dadurch gekennzeichnet, dass**
die zumindest eine Verbindungsanordnung (400, 500) durch eine Verkleidung (440, 540) verkleidet ist.

8. Fahrzeug des Personentransports (1), **gekennzeichnet durch** zumindest eine Haltestandgenanordnung (10) nach einem der Ansprüche 1 bis 7.

9. Fahrzeug des Personentransports (1), nach Anspruch 8,
**dadurch gekennzeichnet, dass**
das Fahrzeug des Personentransports (1) eine Bodenkonstruktion (3) aufweist und die Haltestangenanordnung (10) an der Bodenkonstruktion (3) befestigt ist, wobei die Basis (100) integraler Bestandteil der Bodenkonstruktion (3) ist und mit zumindest einer, vorzugsweise umlaufenden, Schweißnaht (S₁) an der Bodenkonstruktion (3) befestigt ist.

10. Fahrzeug des Personentransports (1), nach Anspruch 8 oder 9,
**dadurch gekennzeichnet, dass**,
die Basis (100) mit einer Schweißnaht (S₁) an einen Obergurt (30) der Bodenkonstruktion (3) angebunden ist, vorzugsweise derart, dass ein Fuß (110) der Basis (100) im Stumpfstoß an den Obergurt (30) angeschweißt ist.

11. Fahrzeug des Personentransports (1), nach Anspruch 8 bis 10,
**dadurch gekennzeichnet, dass**,
die Basis (100) die Hüllkontur der Bodenkonstruktion (3) nicht oder um weniger als 15cm, vorzugsweise weniger als 10cm, überragt.

12. Fahrzeug des Personentransports (1), nach Anspruch 8 bis 11,
**dadurch gekennzeichnet, dass**
das Fahrzeug des Personentransports (1) ein spurgeführtes Fahrzeug, vorzugsweise ein Schienenfahrzeug, ist.
